# EUROPEAN PATENT SPECIFICATION

(11) **EP 3 627 942 B1**
(45) Date of publication and mention of the grant of the patent: **01.06.2022**
(21) Application number: 18841986.5
(22) Date of filing: 27.07.2018
(51) Int. Cl.: H04W 72/08, H04L 5/00, H04L 1/08, H04W 72/14, H04W 72/12, H04W 74/00, H04W 24/08, H04L 1/00

(54) **RESOURCE ALLOCATION METHOD FOR PHYSICAL CHANNELS, APPARATUS, AND APPARATUS FOR ACHIEVING INFORMATION PROCESSING**
RESSOURCENZUWEISUNGSVERFAHREN FÜR PHYSIKALISCHE KANÄLE, VORRICHTUNG UND VORRICHTUNG ZUR ERZIELUNG VON INFORMATIONSVERARBEITUNG
PROCÉDÉ D'ATTRIBUTION DE RESSOURCES POUR DES CANAUX PHYSIQUES, APPAREIL, ET APPAREIL POUR RÉALISER UN TRAITEMENT D'INFORMATIONS

(30) Priority: 31.07.2017 CN 201710640622
(43) Date of publication of application: 25.03.2020
(73) Proprietor: ZTE Corporation, Shenzhen, Guangdong 518057 (CN)
(72) Inventor: JIANG, Jianjun, Shenzhen Guangdong 518057 (CN); GAN, Zhihui, Shenzhen Guangdong 518057 (CN); PENG, Jiangping, Shenzhen Guangdong 518057 (CN); WANG, Wei, Shenzhen Guangdong 518057 (CN)
(74) Representative: Regimbeau
(86) International application number: PCT/CN2018/097508
(87) International publication number: WO 2019/024797

(56) References cited:
- WO-A1-2010/143495
- CN-A- 101 373 998
- CN-A- 102 448 156
- US-A1- 2015 016 312
- US-A1- 2016 212 737
- ERICSSON: "On the UL power control of NPRACH in NB-IoT", 3GPP DRAFT; RP-171218 - ON THE UL POWER CONTROL OF NPRACH IN NB-IOT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FR , vol. TSG RAN, no. West Palm Beach, US; 20170605 - 20170609 5 June 2017 (2017-06-05), XP051280705, Retrieved from the Internet: URL:http://www.3gpp.org/ftp/Meetings_3GPP_ SYNC/RAN/Docs/ [retrieved on 2017-06-05]
- QUALCOMM INCORPORATED: "NB-IOT RLM Enhancement for Rel-14", 3GPP DRAFT; R4-168089_REL14_NB_IOT_RLM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , no. Ljubljana, Slovenia; 20161010 - 20161014 19 October 2016 (2016-10-19), XP051164164, Retrieved from the Internet: URL:http://www.3gpp.org/ftp/tsg_ran/WG4_Ra dio/TSGR4_77/Docs/ [retrieved on 2016-10-19]
- ERICSSON: "On NPRACH based UTDOA impact on NB-IoT performance", 3GPP DRAFT; R1-1608701- ON NPRACH BASED UTDOA IMPACT ON NB-IOT PERFORMANCE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG1, no. Lisbon, Portugal; 20161010 - 20161014 9 October 2016 (2016-10-09), XP051148759, Retrieved from the Internet: URL:http://www.3gpp.org/ftp/Meetings_3GPP_ SYNC/RAN1/Docs/ [retrieved on 2016-10-09]

## Description

### TECHNICAL FIELD

The present invention relates to, but is not limited to, the field of mobile communications, for example, to a method for configuring a physical channel resource and an apparatus therefor, and an information processing apparatus.

### BACKGROUND

The mobile communications are developing from connections between people to connections between people and things and connections between things, and the Internet of everything is an inexorable trend. For telecommunication operators, Internet of things (IoT) applications, such as the Internet of Vehicles, smart healthcare, and smart home, will generate massive connections, which are far beyond communication needs between people. Compared with short-distance communication technologies such as Bluetooth and ZigBee, a mobile cellular network has characteristics of wide coverage, mobility, a large number of connections, and the like, can bring richer application scenarios, and will become a main connection technology of the IoT.

The Narrow Band Internet of Things (NB-IoT) based on the cellular network is an emerging IoT technology that will be widely applied around the world. The NB-IoT has the following characteristics: (1) wide coverage of the NB-IoT: because of improved indoor coverage, on the same frequency band, the NB-IoT has increased gains by at least 20 decibels (dB) compared with other networks and enlarged the coverage by nearly 100 times; (2) a capacity of the NB-IoT to support massive connections: one sector of the NB-IoT can support 100 thousand connections and support low delay-sensitivity, ultralow equipment costs, low equipment power consumption and an optimized network architecture; (3) lower power consumption of the NB-IoT: an NB-IoT terminal module has standby time up to 10 years; (4) lower module costs of the NB-IoT: a business expects that a single connection module costs no more than 5 dollars.

An NB-IoT system needs to meet requirements for deep coverage (such as smart electric meters and water meters in basements, and parking space detectors in underground parking lots) and wide coverage (such as hydrology detection, earthquake detection, and the Internet of vehicles). How to reasonably configure physical channel resource is an urgent problem to be solved.

The reference US 2015/0016312 A1 discloses methods and apparatus for a User Equipment and a base station in communication with each other to determine parameters for a Random Access process.

The reference US 2016/0212737 A1 discloses schemes for combining 5G communication systems with IoT technology to support higher data transmission rate as post-4G systems and systems for the same.

The reference entitled "On the UL power control of NPRACH in NB-loT" discloses a view on the identified problem concerning the NB-IoT NPRACH CE level ramping and power control functionality.

The reference entitled "NB-IOT RLM Enhancement for Rel-14" proposes enhancements to support new signaling by UE to enable eNB to pre-emptively change NPDCCH repetition levels to provide UE with a reliable link quality during coverage level transitions during UE mobility. The reference entitled "On NPRACH based UTDOA impact on NB-loT performance" highlights a few aspects that the sourcing company believes needs to be clarified before RANI is to take a closer look at the feasibility of supporting UTDOA based on the NPRACH.

### SUMMARY

The present application provides a method for configuring a physical channel resource and an apparatus therefor, so as to implement a reasonable configuration of physical channel resource.

The invention is set out in the appended set of claims.

### BRIEF DESCRIPTION OF DRAWINGS

FIG. 1 is a schematic flowchart of a method for configuring a physical channel resource according to an embodiment of the present application;
FIG. 2 is a schematic flowchart of a method for configuring physical channel resources according to an embodiment of the present application;
FIG. 3 is a schematic structural diagram of an apparatus for configuring a physical channel resource according to an embodiment of the present application;
FIG. 4 is a schematic flowchart of a method for configuring a physical channel resource according to an embodiment of the present application;
FIG. 5 is a schematic flowchart of a method for configuring a physical channel resource according to an embodiment of the present application;
FIG. 6 is a schematic flowchart of a method for configuring a physical channel resource according to an embodiment of the present application; and
FIG. 7 is a schematic flowchart of a method for configuring a physical channel resource according to an embodiment of the present application.

### DETAILED DESCRIPTION

Embodiments of the present application are described below in detail with reference to the drawings.

In related technology, a master information block (MIB) of an NB-IoT System is defined. The MIB includes physical channel resource information of a system information block type1 (SIB1). The MIB has three types of numbers of repetitions, i.e., 4 repetitions, 8 repetitions and 16 repetitions; and 4 types of transport block sizes, i.e., 208 bits, 328 bits, 440 bits and 680 bits. Based on practical analysis, more repetitions lead to a higher possibility at which the SIB1 is correctly received by a remote terminal; and a smaller transport block size leads to better robustness and a higher possibility at which the SIB1 is correctly received by the remote terminal. In related technology, the SIB1 of the NB-IoT system is also defined. The SIB1 includes a number (1 to 128) of repetitions of a narrowband physical random access channel (NPRACH) and a number (1 to 2048) of repetitions of a narrowband physical downlink control channel (NPDCCH). Similarly, if the NPRACH has a greater number of repetitions, a base station correctly receives an access signal transmitted by the remote terminal on the NPRACH at a higher possibility; if the NPDCCH has a greater number of repetitions, the remote terminal correctly receives control information transmitted by the base station on the NPDCCH at a higher possibility.

When a new NB-IoT network is deployed, since it is not completely known whether a terminal with deep coverage and a terminal with wide coverage exist within a cell coverage range of the base station, a transport block size with the best robustness and a maximum number of repetitions are generally configured. However, such deployment may occupy many physical channel resources, which reduces resources that may be used by other signalings and traffic data. Therefore, the present application proposes a solution in which physical channel resources of multiple channels are reasonably configured according to a practical deployment situation of multiple terminals within the cell coverage range.

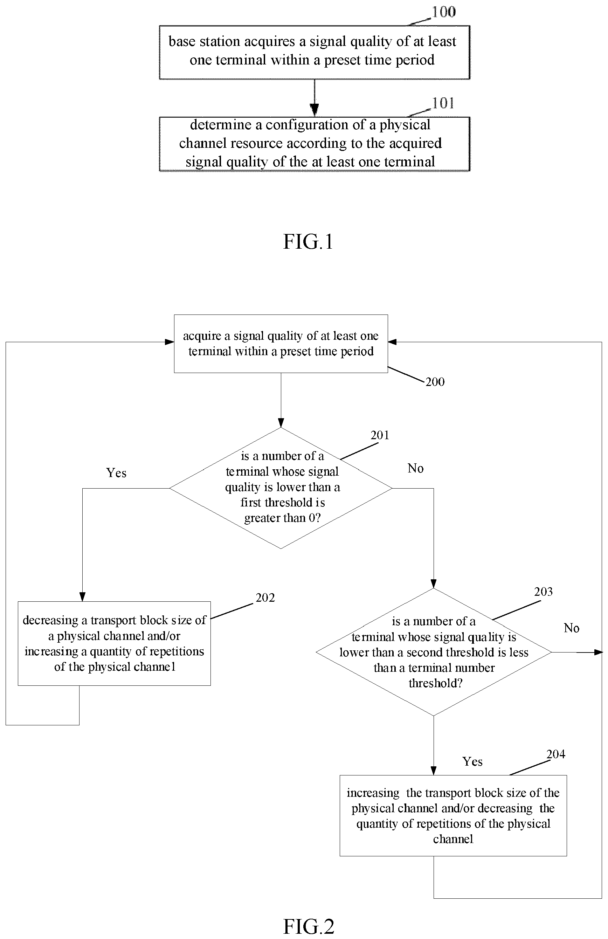

FIG. 1 is a schematic flowchart of a method for configuring a physical channel resource in the present application. As shown in FIG. 1, the method in an embodiment includes steps described below.

In step 100, a signal quality of at least one terminal within a preset time period is acquired.

In an embodiment, the signal quality of each terminal includes any combination of: a signal-to-noise ratio of a random access signal of the terminal; a signal-to-noise ratio of an uplink traffic channel of the terminal; an encoding manner and a channel error rate of the uplink traffic channel of the terminal; and an encoding manner and a channel error rate of a downlink traffic channel of the terminal.

In an embodiment, the at least one terminal may be located within a coverage range of a same cell, as long as a number of the at least one terminal is enough to reflect a signal quality situation within the coverage range of this cell.

In an embodiment, the preset time period is a configurable parameter, such as days or hours. For example, if the preset time period is three days, the signal quality of the at least one terminal within three days is acquired every three days.

In the embodiment, a specific implementation for acquiring any signal quality described above belongs to a technology well-known to those skilled in the art and is not intended to limit the scope of the embodiments of the present application, which is not repeated herein.

In step 101, a configuration of a physical channel resource is determined according to the acquired signal quality of the at least one terminal.

In an embodiment, the physical channel resource includes, but is not limited to, at least one of a transport block size of a physical channel and a number of repetitions of the physical channel. In an embodiment, the physical channel includes, but is not limited to, an SIB 1, an NPRACH, an NPDCCH and the like specified in protocols of the 3rd Generation Partnership Project (3GPP). In an embodiment, as shown in FIG. 2, after the signal quality of the at least one terminal within the preset time period is acquired in step 200, step 101 includes processes described below.

As shown in step 201 and step 202, within the preset time period, if a number of a terminal whose signal quality is lower than a preset first threshold among the at least one terminal is greater than 0, it indicates that a terminal with deep coverage or remote coverage do exist; to ensure a normal access of the terminal with deep coverage or remote coverage, the transport block size of the physical channel is decreased, or the number of repetitions of the physical channel is increased, or the transport block size is decreased and the number of repetitions is increased at the same time. As shown in step 201, step 203, and step 204, within the preset time period, if the number of the terminal whose signal quality is lower than the preset first threshold among the at least one terminal is equal to 0 and a number of a terminal whose signal quality is lower than a preset second threshold among the at least one terminal is less than a preset terminal number threshold, it indicates that no terminals with deep coverage or remote coverage exist, and the configuration of the physical channel resource may be reduced for a traffic channel of the terminal to use. At this time, the transport block size of the physical channel is increased, or the number of repetitions of the physical channel is decreased, or the transport block size is increased and the number of repetitions is decreased at the same time.

In the embodiment, values of the first threshold, the second threshold, and the terminal number threshold are related to practical scenarios, for example, the values may be determined according to experience in conjunction with power of a base station, a coverage range, and the like.

In an embodiment, if the number of the terminal whose signal quality is lower than the preset first threshold among the at least one terminal is equal to 0 and the number of the terminal whose signal quality is lower than the preset second threshold among the at least one terminal is greater than or equal to the preset terminal number threshold, the signal quality of the at least one terminal is continued to be acquired according to the preset time period. For example, if the preset time period is 8:00 to 12:00 every day, the number of terminals is 10, and the terminal number threshold is 4, the signal qualities of 10 terminals within the period from 8:00 to 12:00 may be acquired within the period from 8:00 to 12:00 every day. After the signal qualities of the 10 terminals within the period from 8:00 to 12:00 on a first day are acquired, if it is determined that within the period from 8:00 to 12:00 on the first day, no terminal among the 10 terminal has a signal quality lower than the first threshold and 6 terminals have signal qualities lower than the second threshold, signal qualities of the 10 terminals within the period from 8:00 to 12:00 on a second day are acquired within the period from 8:00 to 12:00 on the second day to determine a configuration of the physical channel resource again according to the acquired signal qualities of the 10 terminals within the period from 8:00 to 12:00 on the second day.

In an embodiment, after at least one of the transport block size and the number of repetitions of the physical channel is adjusted in step 101, the signal quality of the at least one terminal is continued to be acquired according to the preset time period. For example, if the preset time period is 8:00 to 12:00 every day, the number of terminals is 10, and the terminal number threshold is 4, signal qualities of the 10 terminals within the period from 8:00 to 12:00 may be acquired within the period from 8:00 to 12:00 every day. After signal qualities of the 10 terminals within the period from 8:00 to 12:00 on the first day are acquired, if it is determined that within the period from 8:00 to 12:00 on the first day, no terminal among the 10 terminal has a signal quality lower than the first threshold and 2 terminals have signal qualities lower than the second threshold, the transport block size of the physical channel is increased or the number of repetitions of the physical channel is decreased, and signal qualities of the 10 terminals within the period from 8:00 to 12:00 on the second day are acquired within the period from 8:00 to 12:00 on the second day to determine a configuration of the physical channel resource again according to the acquired signal qualities of the 10 terminals within the period from 8:00 to 12:00 on the second day.

In an embodiment, different signal qualities correspond to different first thresholds and different second thresholds.

The first threshold is less than the second threshold.

In an embodiment, when the signal quality of each terminal includes the signal-to-noise ratio of the random access signal of the terminal, step 101 includes steps described below:
if within the preset time period, a number of a terminal whose signal-to-noise ratio of the random access signal is lower than a preset first low threshold among the at least one terminal is greater than 0, the transport block size of the physical channel is decreased, or the number of repetitions of the physical channel is increased, or the transport block size is decreased and the number of repetitions is increased at the same time;
if within the preset time period, the number of the terminal whose signal-to-noise ratio of the random access signal is lower than the preset first low threshold among the at least one terminal is equal to 0 and a number of a terminal whose signal-to-noise ratio of the random access signal is lower than a preset first high threshold among the at least one terminal is less than a preset first terminal number threshold, the transport block size of the physical channel is increased, or the number of repetitions of the physical channel is decreased, or the transport block size is increased and the number of repetitions is decreased at the same time.

In the embodiment, values of the first low threshold, the first high threshold, and the first terminal number threshold are related to practical scenarios, for example, the values may be determined according to experience in conjunction with the power of the base station, the coverage range, an indicator of an access success rate, and the like.

In an embodiment, when the signal quality of each terminal includes the signal-to-noise ratio of the uplink traffic channel of the terminal, step 101 includes steps described below:
if within the preset time period, a number of a terminal whose signal-to-noise ratio of the uplink traffic channel is lower than a preset second low threshold among the at least one terminal is greater than 0, the transport block size of the physical channel is decreased, or the number of repetitions of the physical channel is increased, or the transport block size is decreased and the number of repetitions is increased at the same time;
if within the preset time period, the number of the terminal whose signal-to-noise ratio of the uplink traffic channel is lower than the preset second low threshold among the at least one terminal is equal to 0 and a number of a terminal whose signal-to-noise ratio of the uplink traffic channel is lower than a preset second high threshold among the at least one terminal is less than a preset second terminal number threshold, the transport block size of the physical channel is increased, or the number of repetitions of the physical channel is decreased, or the transport block size is increased and the number of repetitions is decreased at the same time.

In the embodiment, values of the second low threshold, the second high threshold, and the second terminal number threshold are related to practical scenarios, for example, the values may be determined according to experience in conjunction with the power of the base station, the coverage range, an indicator of an uplink traffic quality, and the like.

In an embodiment, when the signal quality of each terminal includes the encoding manner and the channel error rate of the uplink traffic channel of the terminal, step 101 includes steps described below:
if a number of a terminal whose uplink traffic channel quality calculated according to the encoding manner and the channel error rate of the uplink traffic channel acquired within the preset time period is lower than a preset third low threshold among the at least one terminal is greater than 0,
the transport block size of the physical channel is decreased, or the number of repetitions of the physical channel is increased, or the transport block size is decreased and the number of repetitions is increased at the same time;
if the number of the terminal whose uplink traffic channel quality calculated according to the encoding manner and the channel error rate of the uplink traffic channel acquired within the preset time period is lower than the preset third low threshold among the at least one terminal is equal to 0 and a number of a terminal whose uplink traffic channel quality calculated according to the encoding manner and the channel error rate of the uplink traffic channel acquired within the preset time period is lower than a preset third high threshold among the at least one terminal is less than a preset third terminal number threshold, the transport block size of the physical channel is increased, or the number of repetitions of the physical channel is decreased, or the transport block size is increased and the number of repetitions is decreased at the same time.

In the embodiment, values of the third low threshold, the third high threshold, and the third terminal number threshold are related to practical scenarios, for example, the values may be determined according to experience in conjunction with the power of the base station, the coverage range, the indicator of the uplink traffic quality, and the like.

In the embodiment, a specific implementation for calculating the uplink traffic channel quality according to the encoding manner and the channel error rate of the uplink traffic channel belongs to a common technical means for those skilled in the art and is not intended to limit the scope of the present application, which is not repeated herein.

In an embodiment, when the signal quality of each terminal includes the encoding manner and the channel error rate of the downlink traffic channel of the terminal, step 101 includes steps described below:
if a number of a terminal whose downlink traffic channel quality calculated according to the encoding manner and the channel error rate of the downlink traffic channel acquired within the preset time period is lower than a preset fourth low threshold among the at least one terminal is greater than 0, the transport block size of the physical channel is decreased, or the number of repetitions of the physical channel is increased, or the transport block size is decreased and the number of repetitions is increased at the same time;
if the number of the terminal whose downlink traffic channel quality calculated according to the encoding manner and the channel error rate of the downlink traffic channel acquired within the preset time period is lower than the preset fourth low threshold among the at least one terminal is equal to 0 and a number of a terminal whose downlink traffic channel quality calculated according to the encoding manner and the channel error rate of the downlink traffic channel acquired within the preset time period is lower than a preset fourth high threshold among the at least one terminal is less than a preset fourth terminal number threshold, the transport block size of the physical channel is increased, or the number of repetitions of the physical channel is decreased, or the transport block size is increased and the number of repetitions is decreased at the same time.

In the embodiment, values of the fourth low threshold, the fourth high threshold, and the fourth terminal number threshold are related to practical scenarios, for example, the values may be determined according to experience in conjunction with the power of the base station, the coverage range, an indicator of a downlink traffic quality, and the like.

In the embodiment, a specific implementation for calculating the downlink traffic channel quality according to the encoding manner and the channel error rate of the downlink traffic channel belongs to a common technical means for those skilled in the art and is not intended to limit the scope of the present application, which is not repeated herein.

With the method for configuring the physical channel resource provided by the present application, resource configuration of a related physical channel is dynamically adjusted according to a practical deployment situation of a terminal with deep coverage and a terminal with wide coverage within the coverage range of a cell in an NB-IoT system, and reasonable configuration of the physical channel resource is achieved, thereby ensuring terminal access and traffic performance, saving radio resources as much as possible, and especially improving a capacity of the NB-IoT system.

The present application further provides a computer-readable storage medium, which store therein computer-executable instructions for executing the method for configuring a physical channel resource provided by the present application.

The present application further provides an information processing apparatus, including a processor, a memory, and computer programs stored in the memory and executable by the processor, where, when executing the computer programs, the processor performs the following steps: a base station acquiring a signal quality of at least one terminal within a preset time period; and the base station determining a configuration of a physical channel resource according to the acquired signal quality of the at least one terminal.

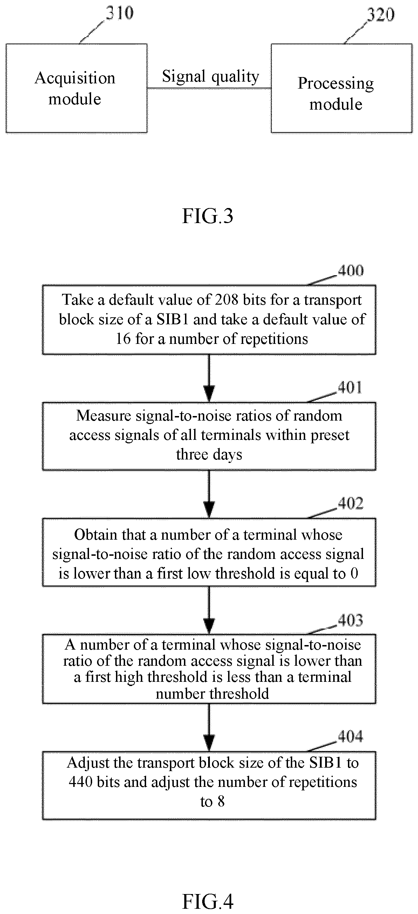

FIG. 3 is a schematic structural diagram of an apparatus for configuring a physical channel resource in the present application. As shown in FIG. 3, the apparatus includes an acquisition module 310 and a processing module 320.

The acquisition module 310 is used to acquire a signal quality of at least one terminal within a preset time period.

The processing module 320 is used to determine a configuration of a physical channel resource according to the acquired signal quality of the at least one terminal.

In an embodiment, the signal quality of each terminal includes any combination of: a signal-to-noise ratio of a random access signal of the terminal; a signal-to-noise ratio of an uplink traffic channel of the terminal; an encoding manner and a channel error rate of the uplink traffic channel of the terminal; and an encoding manner and a channel error rate of a downlink traffic channel of the terminal.

In an embodiment, the at least one terminal may be located within a coverage range of a same cell, as long as a number of the at least one terminal is enough to reflect a signal quality situation within the coverage range of this cell.

In an embodiment, the preset time period is a configurable parameter, such as days or hours.

In an embodiment, the physical channel resource includes, but is not limited to, at least one of a transport block size of a physical channel and a number of repetitions of the physical channel. In an embodiment, the physical channel includes, but is not limited to, a SIB1, an NPRACH, an NPDCCH, and the like.

In an embodiment, the processing module 320 is used to perform operations described below:
if a number of a terminal whose signal quality is lower than a preset first threshold among the at least one terminal is greater than 0, the transport block size of the physical channel is decreased,
or the number of repetitions of the physical channel is increased, or the transport block size is decreased and the number of repetitions is increased at the same time;
if the number of the terminal whose signal quality is lower than the preset first threshold among the at least one terminal is equal to 0 and a number of a terminal whose signal quality is lower than a preset second threshold among the at least one terminal is less than a preset terminal number threshold, the transport block size of the physical channel is increased, or the number of repetitions of the physical channel is decreased, or the transport block size is increased and the number of repetitions is decreased at the same time.

In an embodiment, the processing module 320 is further used to perform the following operation: if the number of the terminal whose signal quality is lower than the preset first threshold among the at least one terminal is equal to 0 and the number of the terminal whose signal quality is lower than the preset second threshold among the at least one terminal is greater than or equal to the preset terminal number threshold, the signal quality of the at least one terminal is continued to be acquired according to the preset time period.

In an embodiment, the processing module 320 is further used to perform the following operation: after at least one of a configuration of the transport block size of the physical channel and a configuration of the number of repetitions of the physical channel is completed, the signal quality of the at least one terminal is continued to be acquired according to the preset time period.

In an embodiment, when the signal quality of each terminal includes the signal-to-noise ratio of the random access signal of the terminal, the processing module 320 is used to determine the configuration of the physical channel resource in manners described below:
when a number of a terminal whose signal-to-noise ratio of the random access signal is lower than a preset first low threshold among the at least one terminal is greater than 0, the transport block size of the physical channel is decreased, or the number of repetitions of the physical channel is increased, or the transport block size is decreased and the number of repetitions is increased at the same time;
when the number of the terminal whose signal-to-noise ratio of the random access signal is lower than the preset first low threshold among the at least one terminal is equal to 0 and a number of a terminal whose signal-to-noise ratio of the random access signal is lower than a preset first high threshold among the at least one terminal is less than a first terminal number threshold, the transport block size of the physical channel is increased, or the number of repetitions of the physical channel is decreased, or the transport block size is increased and the number of repetitions is decreased at the same time.

In an embodiment, when the signal quality of each terminal includes the signal-to-noise ratio of the uplink traffic channel of the terminal, the processing module 320 is used to determine the configuration of the physical channel resource in manners described below:
when a number of a terminal whose signal-to-noise ratio of the uplink traffic channel is lower than a preset second low threshold among the at least one terminal is greater than 0, the transport block size of the physical channel is decreased, or the number of repetitions of the physical channel is increased, or the transport block size is decreased and the number of repetitions is increased at the same time;
when the number of the terminal whose signal-to-noise ratio of the uplink traffic channel is lower than the preset second low threshold among the at least one terminal is equal to 0 and a number of a terminal whose signal-to-noise ratio of the uplink traffic channel is lower than a preset second high threshold among the at least one terminal is less than a preset second terminal number threshold, the transport block size of the physical channel is increased, or the number of repetitions of the physical channel is decreased, or the transport block size is increased and the number of repetitions is decreased at the same time.

In an embodiment, when the signal quality of each terminal includes the encoding manner and the channel error rate of the uplink traffic channel of the terminal, the processing module 320 is used to determine the configuration of the physical channel resource in manners described below: when a number of a terminal whose uplink traffic channel quality calculated according to the encoding manner and the channel error rate of the uplink traffic channel is lower than a preset third low threshold among the at least one terminal is greater than 0, the transport block size of the physical channel is decreased, or the number of repetitions of the physical channel is increased, or the transport block size is decreased and the number of repetitions is increased at the same time; when the number of the terminal whose uplink traffic channel quality calculated according to the encoding manner and the channel error rate of the uplink traffic channel acquired within the preset time period is lower than the preset third low threshold among the at least one terminal is equal to 0 and a number of a terminal whose uplink traffic channel quality calculated according to the encoding manner and the channel error rate of the uplink traffic channel acquired within the preset time period is lower than a preset third high threshold among the at least one terminal is less than a preset third terminal number threshold, the transport block size of the physical channel is increased, or the number of repetitions of the physical channel is decreased, or the transport block size is increased and the number of repetitions is decreased at the same time.

In an embodiment, when the signal quality of each terminal includes the encoding manner and the channel error rate of the downlink traffic channel of the terminal, the processing module 320 is used to determine the configuration of the physical channel resource in manners described below:
when a number of a terminal whose downlink traffic channel quality calculated according to the encoding manner and the channel error rate of the downlink traffic channel acquired within the preset time period is lower than a preset fourth low threshold among the at least one terminal is greater than 0, the transport block size of the physical channel is decreased, or the number of repetitions of the physical channel is increased, or the transport block size is decreased and the number of repetitions is increased at the same time;
when the number of the terminal whose downlink traffic channel quality calculated according to the encoding manner and the channel error rate of the downlink traffic channel acquired within the preset time period is lower than the preset fourth low threshold among the at least one terminal is equal to 0 and a number of a terminal whose downlink traffic channel quality calculated according to the encoding manner and the channel error rate of the downlink traffic channel acquired within the preset time period is lower than a preset fourth high threshold among the at least one terminal is less than a preset fourth terminal number threshold, the transport block size of the physical channel is increased, or the number of repetitions of the physical channel is decreased, or the transport block size is increased and the number of repetitions is decreased at the same time.

The present application further provides a base station including any apparatus for configuring the physical channel resource shown in FIG. 3.

The present application is described below in detail in conjunction with specific embodiments.

FIG. 4 is a schematic flowchart of a method for configuring a physical channel resource according to an embodiment of the present application. In the embodiment, a signal-to-noise ratio of a random access signal of a terminal is taken as an example of a signal quality. It is assumed that a newly deployed cell A in an NB-IoT network covers a certain residential area and mainly provides NB-IoT accesses to smart electric meters of the residential area. As shown in FIG. 4, the method in the embodiment includes steps described below.

In step 400, a default value of a transport block size of an SIB1 of the cell A is set to be a value of the transport block size with best robustness, such as 208 bits, and a default value of a number of repetitions of the SIB1 is set to be a maximum number of repetitions, such as 16.

In step 401, within a preset time period such as three days, an NB-IoT base station measures in real time the signal-to-noise ratio of the random access signal of each terminal (including the smart electric meters and other types of terminals) within a coverage range of the cell, and collects in real time a number of a terminal whose signal-to-noise ratio of the random access signal is lower than a configurable first low threshold and a number of a terminal whose signal-to-noise ratio of the random access signal is lower than a configurable first high threshold.

The first high threshold is greater than the first low threshold.

In steps 402 and 403, after measurement and statistics within the three days, it is assumed that the base station finds that the number of the terminal whose signal-to-noise ratio of the random access signal is lower than the first low threshold in the whole cell is equal to 0 and the number of the terminal whose signal-to-noise ratio of the random access signal is lower than the first high threshold is lower than a preset terminal number threshold, it is indicated that the cell has no terminal with deep coverage or remote coverage.

In step 404, the transport block size of the SIB1 in a narrowband physical downlink shared channel (NPDSCH) is adjusted to a greater size such as 440 bits, and at the same time the number of repetitions is decreased to, for example, 8 so that the SIB1 occupies fewer physical channel resources, thereby increasing physical channel resources usable by terminal traffic.

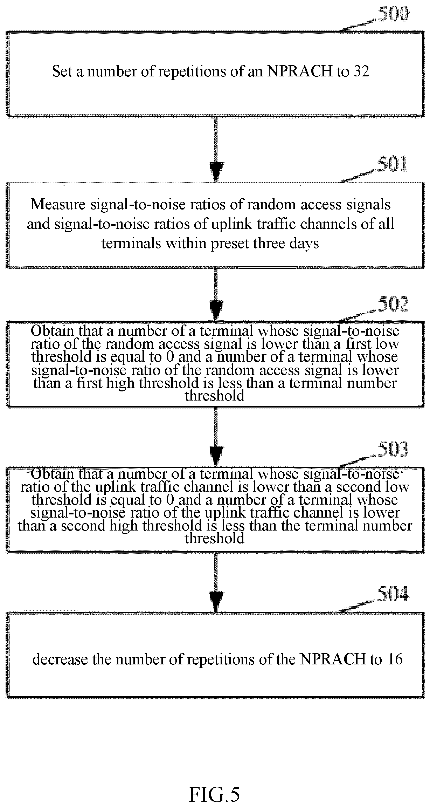

FIG. 5 is a schematic flowchart of a method for configuring a physical channel resource according to an embodiment of the present application. In the embodiment, a signal-to-noise ratio of a random access signal and a signal-to-noise ratio of an uplink traffic channel of a terminal are taken as an example of a signal quality. It is assumed that a newly deployed cell B in an NB-IoT network covers a certain commercial center and provides NB-IoT accesses to all parking space detection terminals of an underground garage of the commercial center. As shown in FIG. 5, the method in the embodiment includes steps described below.

In step 500, a default value of a number of repetitions of an NPRACH of the cell B is set to be a relatively large number of repetitions such as 32.

In step 501, within a preset time period such as three days, an NB-IoT base station measures in real time the signal-to-noise ratio of the random access signal and the signal-to-noise ratio of the uplink traffic channel of each terminal (including the parking space detection terminals and other types of terminals) within a coverage range of the cell, and collects in real time a number of a terminal whose signal-to-noise ratio of the random access signal is lower than a first low threshold, a number of a terminal whose signal-to-noise ratio of the random access signal is lower than a first high threshold, a number of a terminal whose signal-to-noise ratio of the uplink traffic channel is lower than a second low threshold, and a number of a terminal whose signal-to-noise ratio of the uplink traffic channel is lower than a second high threshold.

The second high threshold is greater than the second low threshold.

In steps 502 and 503, after measurement and statistics within the three days, it is assumed that the base station finds that the number of the terminal whose signal-to-noise ratio of the random access signal is lower than the first low threshold in the whole cell is equal to 0, the number of the terminal whose signal-to-noise ratio of the random access signal is lower than the first high threshold is lower than a terminal number threshold, the number of the terminal whose signal-to-noise ratio of the uplink traffic channel is lower than the second low threshold is equal to 0, and the number of the terminal whose signal-to-noise ratio of the uplink traffic channel is lower than the second high threshold is lower than the terminal number threshold, it is indicated that the cell has no terminal with deep coverage or remote coverage.

In step 504, the number of repetitions of the NPRACH is decreased to, for example, 16 so that the NPRACH occupies fewer physical channel resource and the cell B may accommodate more terminal accesses.

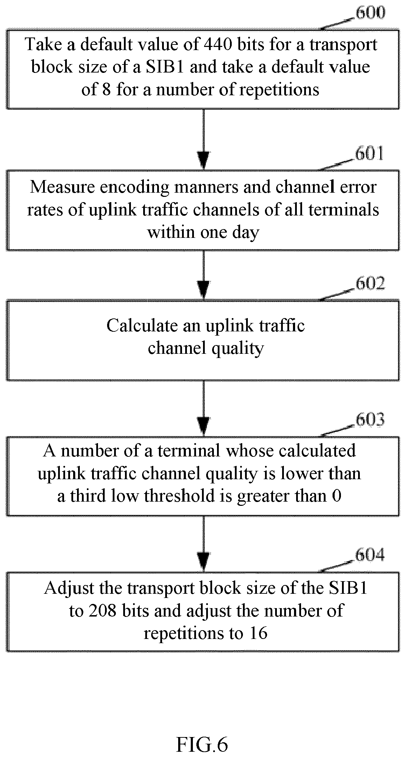

FIG. 6 is a schematic flowchart of a method for configuring a physical channel resource according to an embodiment of the present application. In the embodiment, an encoding manner and a channel error rate of an uplink traffic channel of a terminal are taken as an example of a signal quality. It is assumed that a cell C in an NB-IoT network covers a certain residential area and mainly provides NB-IoT accesses to smart electric meters of the residential area. As shown in FIG. 6, the method in the embodiment includes steps described below.

In step 600, a transport block size of a SIB1 of the cell C is set to be 440 bits and a number of repetitions of the SIB1 is set to be 8.

In step 601, within a preset time period such as one day, an NB-IoT base station measures in real time the encoding manner and the channel error rate of the uplink traffic channel of each terminal (including the smart electric meters and other types of terminals).

In step 602, the base station calculates an uplink traffic channel quality according to the measured encoding manner and the channel error rate of the uplink traffic channel, and collects in real time a number of a terminal whose uplink traffic channel quality is lower than a third low threshold and a number of a terminal whose uplink traffic channel quality is lower than a third high threshold.

The third high threshold is greater than the third low threshold.

In step 603, after measurement and statistics within one day, it is assumed that the base station finds that the number of the terminal whose uplink traffic channel quality is lower than the third low threshold is greater than 0, it is indicated that the cell C has a newly added terminal with deep coverage.

In step 604, the transport block size of the SIB1 in an NPDSCH is adjusted to a smaller size such as 208 bits, and the number of repetitions is increased to, for example, 16 so that a SIB1 channel has enhanced anti-interference performance and can be correctly received by the newly added terminal with deep coverage.

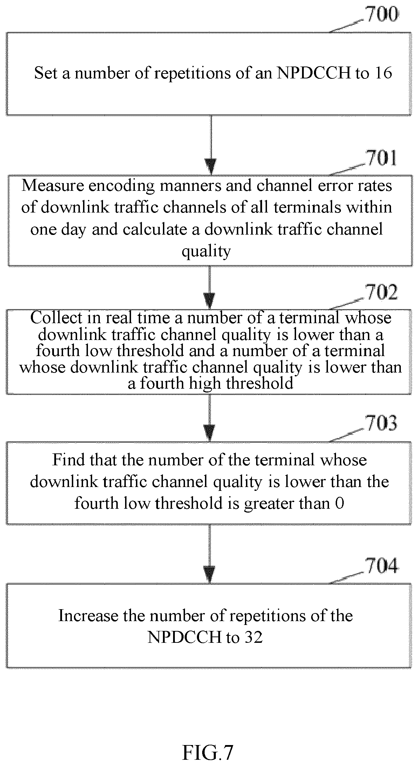

FIG. 7 is a schematic flowchart of a method for configuring a physical channel resource according to an embodiment of the present application. In the embodiment, an encoding manner and a channel error rate of a downlink traffic channel of a terminal are taken as an example of a signal quality. It is assumed that a cell D in an NB-IoT network has been deployed and has operated for a period of time, covers a certain commercial center, and provides NB-IoT accesses to all parking space detection terminals of an underground garage of the commercial center. As shown in FIG. 7, the method in the embodiment includes steps described below.

In step 700, in the embodiment, it is assumed that a current number of repetitions of an NPDCCH of the cell D is set to be 16.

In step 701, within a preset time period such as one day, an NB-IoT base station measures in real time the encoding manner and the channel error rate of the downlink traffic channel of each terminal (including the parking space detection terminals and other types of terminals), and calculates a downlink traffic channel quality according to the encoding manner and the channel error rate of the downlink traffic channel.

In step 702, the base station collects in real time a number of a terminal whose downlink traffic channel quality is lower than a fourth low threshold and a number of a terminal whose downlink traffic channel quality is lower than a fourth high threshold.

The fourth high threshold is greater than the fourth low threshold.

In step 703, after measurement and statistics within one day, it is assumed that the base station finds that the number of the terminal whose downlink traffic channel quality is lower than the fourth low threshold is greater than 0, it is indicated that the cell D has a newly added terminal with deep coverage.

In step 704, the number of repetitions of the NPDCCH is increased to 32 so that the NPDCCH has enhanced anti-interference performance and can be correctly received by the newly added terminal with deep coverage.

## Claims

1. A method for configuring a physical channel resource, **characterized by** comprising:
acquiring (100) a signal quality of at least one terminal within a preset time period; and
determining (101) a configuration of the physical channel resource according to the acquired signal quality of the at least one terminal,
wherein the physical channel resource comprises at least one of a transport block size of a physical channel and a quantity of repetitions of the physical channel;
wherein the determining (101) the configuration of the physical channel resource according to the acquired signal quality of the at least one terminal comprises:
when a quantity of terminals whose signal quality is lower than a preset first threshold among the at least one terminal is greater than 0, determining at least one of the following configurations: decreasing (202) the transport block size of the physical channel and increasing (202) the quantity of repetitions of the physical channel;
when the quantity of terminals whose signal quality is lower than the preset first threshold among the at least one terminal is equal to 0 and a quantity of terminals whose signal quality is lower than a preset second threshold among the at least one terminal is less than a preset terminal quantity threshold, determining at least one of the following configurations: increasing (204) the transport block size of the physical channel and decreasing (204) the quantity of repetitions of the physical channel; and
when the quantity of terminals whose signal quality is lower than the preset first threshold among the at least one terminal is equal to 0 and the quantity of terminals whose signal quality is lower than the preset second threshold among the at least one terminal is greater than or equal to the preset terminal quantity threshold, continuing to acquire the signal quality of the at least one terminal according to the preset time period;
wherein the first threshold is less than the second threshold, and
wherein the at least one terminal is located within a coverage range of a same cell.

2. The method according to claim 1, further comprising:
after completing at least one of a configuration of the transport block size of the physical channel and a configuration of the quantity of repetitions of the physical channel, continuing to acquire the signal quality of the at least one terminal according to the preset time period.

3. The method according to any one of claims 1 to 2 , wherein the signal quality of each terminal comprises at least one of:
a signal-to-noise ratio of a random access signal of the terminal;
a signal-to-noise ratio of an uplink traffic channel of the terminal;
an encoding manner and a channel error rate of the uplink traffic channel of the terminal; and
an encoding manner and a channel error rate of a downlink traffic channel of the terminal.

4. An apparatus for configuring a physical channel resource, **characterized by** comprising an acquisition module (310) and a processing module (320);
wherein the acquisition module (310) is configured to acquire a signal quality of at least one terminal within a preset time period; and
the processing module (320) is configured to determine a configuration of the physical channel resource according to the acquired signal quality of the at least one terminal; wherein the physical channel resource comprises at least one of a transport block size of a physical channel and a quantity of repetitions of the physical channel;
wherein the processing module (320) is further configured to:
when a quantity of terminals whose signal quality is lower than a preset first threshold among the at least one terminal is greater than 0, determine at least one of the following configurations: decreasing the transport block size of the physical channel and increasing the quantity of repetitions of the physical channel;
when the quantity of terminals whose signal quality is lower than the preset first threshold among the at least one terminal is equal to 0 and a quantity of terminals whose signal quality is lower than a preset second threshold among the at least one terminal is less than a preset terminal quantity threshold, determine at least one of the following configurations: increasing the transport block size of the physical channel and decreasing the quantity of repetitions of the physical channel; and
when the quantity of terminals whose signal quality is lower than the preset first threshold among the at least one terminal is equal to 0 and the quantity of terminals whose signal quality is lower than the preset second threshold among the at least one terminal is greater than or equal to the preset terminal quantity threshold, continuing to acquire the signal quality of the at least one terminal according to the preset time period;
wherein the first threshold is less than the second threshold, and wherein the at least one terminal is located within a coverage range of a same cell.

5. The apparatus according to claim 4 , wherein the signal quality of each terminal comprises at least one of:
a signal-to-noise ratio of a random access signal of the terminal;
a signal-to-noise ratio of an uplink traffic channel of the terminal;
an encoding manner and a channel error rate of the uplink traffic channel of the terminal; and
an encoding manner and a channel error rate of a downlink traffic channel of the terminal.

6. A computer-readable storage medium, **characterized in that** it stores computer-executable instructions for executing the method for configuring the physical channel resource of any one of claims 1 to 4.

## Patentansprüche

1. Verfahren zum Konfigurieren einer physikalischen Kanalressource, **dadurch gekennzeichnet, dass** es umfasst:
Erfassen (100) einer Signalqualität von mindestens einem Endgerät innerhalb einer voreingestellten Zeitspanne; und
Bestimmen (101) einer Konfiguration der physikalischen Kanalressource gemäß der erfassten Signalqualität des mindestens einen Endgerätes,
wobei die physikalische Kanalressource mindestens eines von einer Transportblockgröße eines physikalischen Kanals und einer Menge von Wiederholungen des physikalischen Kanals umfasst;
wobei das Bestimmen (101) der Konfiguration der physikalischen Kanalressource gemäß der erfassten Signalqualität des mindestens einen Endgerätes umfasst:
wenn eine Anzahl von Endgeräten, deren Signalqualität niedriger als ein voreingestellter erster Schwellenwert unter dem mindestens einen Endgerät ist, größer als 0 ist, Bestimmen mindestens einer der folgenden Konfigurationen: Verringern (202) der Transportblockgröße des physikalischen Kanals und Erhöhen (202) der Menge der Wiederholungen des physikalischen Kanals;
wenn die Anzahl der Endgeräte, deren Signalqualität unter dem voreingestellten ersten Schwellenwert liegt, bei dem mindestens einen Endgerät gleich 0 ist und eine Anzahl der Endgeräte, deren Signalqualität unter einem voreingestellten zweiten Schwellenwert liegt, bei dem mindestens einen Endgerät kleiner ist als ein voreingestellter Schwellenwert der Endgeräteanzahl, Bestimmen mindestens einer der folgenden Konfigurationen: Erhöhen (204) der Transportblockgröße des physikalischen Kanals und Verringern (204) der Anzahl der Wiederholungen des physikalischen Kanals; und
wenn die Anzahl der Endgeräte, deren Signalqualität niedriger als der voreingestellte erste Schwellenwert ist, bei dem mindestens einen Endgerät gleich 0 ist und die Anzahl der Endgeräte, deren Signalqualität niedriger als der voreingestellte zweite Schwellenwert ist,
bei dem mindestens einen Endgerät größer oder gleich dem voreingestellten Schwellenwert der Endgeräteanzahlist, Fortsetzen des Erfassens der Signalqualität des mindestens einen Endgerätes gemäß der voreingestellten Zeitperiode;
wobei der erste Schwellenwert kleiner als der zweite Schwellenwert ist, und wobei sich das mindestens eine Endgerät innerhalb einer Reichweite einer gleichen Zelle befindet.

2. Verfahren nach Anspruch 1, ferner umfassend:
nach Abschluss mindestens einer Konfiguration der Transportblockgröße des physikalischen Kanals und einer Konfiguration der Anzahl der Wiederholungen des physikalischen Kanals, Fortsetzen der Erfassung der Signalqualität des mindestens einen Endgeräts gemäß der voreingestellten Zeitspanne.

3. Verfahren nach einem der Ansprüche 1 bis 2, wobei die Signalqualität jedes Endgeräts mindestens eines der folgenden Merkmale umfasst:
ein Signal-Rausch-Verhältnis eines Direktzugriffssignals des Endgerätes;
ein Signal-Rausch-Verhältnis eines Uplink-Verkehrskanals des Endgeräts;
eine Kodierungsart und eine Kanalfehlerrate des Uplink-Verkehrskanals des Endgeräts; und
eine Kodierungsart und eine Kanalfehlerrate eines Downlink-Verkehrskanals des Endgeräts.

4. Vorrichtung zum Konfigurieren einer physikalischen Kanalressource, **dadurch gekennzeichnet, dass** sie ein Erfassungsmodul (310) und ein Verarbeitungsmodul (320) umfasst;
wobei das Erfassungsmodul (310) so konfiguriert ist, dass es eine Signalqualität von mindestens einem Endgerät innerhalb einer voreingestellten Zeitspanne erfasst; und
das Verarbeitungsmodul (320) so konfiguriert ist, dass es eine Konfiguration der physikalischen Kanalressource gemäß der erfassten Signalqualität des mindestens einen Endgeräts zu bestimmt;
wobei die physikalische Kanalressource mindestens eines von einer Transportblockgröße, eines physikalischen Kanals und einer Anzahl von Wiederholungen des physikalischen Kanals umfasst;
wobei das Verarbeitungsmodul (320) ferner konfiguriert ist, um:
wenn eine Anzahl von Endgeräten, deren Signalqualität niedriger als ein voreingestellter erster Schwellenwert unter dem mindestens einen Endgerät ist, größer als 0 ist, mindestens eine der folgenden Konfigurationen zu bestimmen: Verringern der Transportblockgröße des physikalischen Kanals und Erhöhen der Anzahl der Wiederholungen des physikalischen Kanals;
wenn die Anzahl der Endgeräte, deren Signalqualität unter dem voreingestellten ersten Schwellenwert liegt, bei dem mindestens einen Endgerät gleich 0 ist und die Anzahl der Endgeräte, deren Signalqualität unter einem voreingestellten zweiten Schwellenwert liegt, bei dem mindestens einen Endgerät kleiner als ein voreingestellter Schwellenwert der Endgeräteanzahlist, mindestens eine der folgenden Konfigurationen bestimmen: Vergrößern der Transportblockgröße des physikalischen Kanals und Verringern der Anzahl der Wiederholungen des physikalischen Kanals; und
wenn die Anzahl der Endgeräte, deren Signalqualität geringer ist als der voreingestellte erste Schwellenwert unter dem mindestens einen Endgerät, gleich 0 ist und die Anzahl der Endgeräte, deren Signalqualität geringer ist als der voreingestellte zweite Schwellenwert unter dem mindestens einen Endgerät, größer oder gleich dem voreingestellten Endgerät-Mengenschwellenwert ist, Fortsetzen des Erfassens der Signalqualität des mindestens einen Endgerätes gemäß der voreingestellten Zeitperiode;
wobei der erste Schwellenwert kleiner als der zweite Schwellenwert ist, und wobei sich das mindestens eine Endgerät innerhalb einer Reichweite einer gleichen Zelle befindet.

5. Vorrichtung nach Anspruch 4, wobei die Signalqualität jedes Endgeräts mindestens eines der folgenden Merkmale umfasst:
ein Signal-Rausch-Verhältnis eines Direktzugriffssignals des Endgerätes;
ein Signal-Rausch-Verhältnis eines Uplink-Verkehrskanals des Endgeräts;
eine Kodierungsart und eine Kanalfehlerrate des Uplink-Verkehrskanals des Endgeräts; und
eine Kodierungsart und eine Kanalfehlerrate eines Downlink-Verkehrskanals des Endgeräts.

6. Computerlesbares Speichermedium, **dadurch gekennzeichnet, dass** es computerausführbare Anweisungen zum Ausführen des Verfahrens zum Konfigurieren der physikalischen Kanalressource nach einem der Ansprüche 1 bis 4 speichert.

## Revendications

1. Procédé de configuration d'une ressource de canal physique, **caractérisé en ce qu'**il comprend :
l'acquisition (100) d'une qualité de signal d'au moins un terminal dans une période de temps prédéfinie ; et
la détermination (101) d'une configuration de la ressource de canal physique en fonction de la qualité de signal acquise de l'au moins un terminal,
dans lequel la ressource de canal physique comprend au moins l'une d'une taille de bloc de transport d'un canal physique et d'une quantité de répétitions du canal physique ;
dans lequel la détermination (101) de la configuration de la ressource de canal physique en fonction de la qualité de signal acquise de l'au moins un terminal comprend :
lorsqu'une quantité de terminaux dont la qualité de signal est inférieure à un premier seuil prédéfini parmi l'au moins un terminal est supérieure à 0, la détermination d'au moins une des configurations suivantes : la diminution (202) de la taille du bloc de transport du canal physique et l'augmentation (202) de la quantité de répétitions du canal physique ;
lorsque la quantité de terminaux dont la qualité de signal est inférieure au premier seuil prédéfini parmi l'au moins un terminal est égale à 0 et qu'une quantité de terminaux dont la qualité de signal est inférieure à un deuxième seuil prédéfini parmi l'au moins un terminal est inférieure à un seuil de quantité de terminaux prédéfini, la détermination d'au moins une des configurations suivantes : augmenter (204) la taille du bloc de transport du canal physique et diminuer (204) la quantité de répétitions du canal physique ; et
lorsque la quantité de terminaux dont la qualité de signal est inférieure au premier seuil prédéfini parmi l'au moins un terminal est égale à 0 et que la quantité de terminaux dont la qualité de signal est inférieure au deuxième seuil prédéfini parmi l'au moins un terminal est supérieure ou égale au seuil de quantité de terminaux prédéfini, continuer à acquérir la qualité du signal de l'au moins un terminal selon la période de temps prédéfinie ;
dans lequel le premier seuil est inférieur au second seuil, et dans lequel l'au moins un terminal est situé dans une zone de couverture d'une même cellule.

2. Procédé selon la revendication 1, comprenant en outre :
après avoir terminé au moins l'une d'une configuration de la taille du bloc de transport du canal physique et d'une configuration de la quantité de répétitions du canal physique, continuer à acquérir la qualité du signal de l'au moins un terminal selon la période de temps prédéfinie.

3. Procédé selon l'une quelconque des revendications 1 à 2, dans lequel la qualité du signal de chaque terminal comprend au moins l'un des éléments suivants :
un rapport signal/bruit d'un signal d'accès aléatoire du terminal ;
un rapport signal/bruit d'un canal de trafic de liaison montante du terminal ;
une manière de codage et un taux d'erreur de canal du canal de trafic de liaison montante du terminal ; et
une manière de codage et un taux d'erreur de canal d'un canal de trafic de liaison descendante du terminal.

4. Appareil pour configurer une ressource de canal physique, **caractérisé en ce qu'**il comprend un module d'acquisition (310) et un module de traitement (320) ;
dans lequel le module d'acquisition (310) est configuré pour acquérir une qualité de signal d'au moins un terminal dans une période de temps prédéfinie ; et
le module de traitement (320) est configuré pour déterminer une configuration de la ressource de canal physique en fonction de la qualité de signal acquise de l'au moins un terminal ;
dans lequel la ressource de canal physique comprend au moins l'un d'une taille de bloc de transport d'un canal physique et d'une quantité de répétitions du canal physique ;
dans lequel le module de traitement (320) est en outre configuré pour :
lorsqu'une quantité de terminaux dont la qualité de signal est inférieure à un premier seuil prédéfini parmi l'au moins un terminal est supérieure à 0, déterminer au moins l'une des configurations suivantes : diminuer la taille du bloc de transport du canal physique et augmenter la quantité de répétitions du canal physique ;
lorsque la quantité de terminaux dont la qualité de signal est inférieure au premier seuil prédéfini parmi l'au moins un terminal est égale à 0 et qu'une quantité de terminaux dont la qualité de signal est inférieure à un deuxième seuil prédéfini parmi l'au moins un terminal est inférieure à un seuil de quantité de terminaux prédéfini, déterminer au moins une des configurations suivantes : augmenter la taille du bloc de transport du canal physique et diminuer la quantité de répétitions du canal physique ; et
lorsque la quantité de terminaux dont la qualité de signal est inférieure au premier seuil prédéfini parmi l'au moins un terminal est égale à 0 et que la quantité de terminaux dont la qualité de signal est inférieure au deuxième seuil prédéfini parmi l'au moins un terminal est supérieure ou égale au seuil de quantité de terminaux prédéfini, continuer à acquérir la qualité du signal de l'au moins un terminal selon la période de temps prédéfinie ;
dans lequel le premier seuil est inférieur au second seuil, et dans lequel l'au moins un terminal est situé dans une zone de couverture d'une même cellule.

5. Appareil selon la revendication 4, dans lequel la qualité de signal de chaque terminal comprend au moins l'un des éléments suivants :
un rapport signal/bruit d'un signal d'accès aléatoire du terminal ;
un rapport signal/bruit d'un canal de trafic de liaison montante du terminal ;
une manière de codage et un taux d'erreur de canal du canal de trafic de liaison montante du terminal ; et
une manière de codage et un taux d'erreur de canal d'un canal de trafic de liaison descendante du terminal.

6. Support de stockage lisible par ordinateur, **caractérisé en ce qu'**il stocke des instructions exécutables par un ordinateur pour exécuter le procédé de configuration de la ressource de canal physique selon l'une quelconque des revendications 1 à 4.
